(19) Europäisches Patentamt
European Patent Office
Office européen des brevets

(11) **EP 2 675 152 A2**

(12) **EUROPEAN PATENT APPLICATION**

(43) Date of publication:
**18.12.2013 Bulletin 2013/51**

(51) Int Cl.:
***H04N 5/347*** *(2011.01)*

(21) Application number: **13168779.0**

(22) Date of filing: **22.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.06.2012 JP 2012133276**

(71) Applicant: **CANON KABUSHIKI KAISHA Ohta-ku Tokyo 146-8501 (JP)**

(72) Inventors:
• **Niwa, Hiroaki Ohta-ku, Tokyo (JP)**
• **Saito, Hidehiko Ohta-ku, Tokyo (JP)**

(74) Representative: **Derham, Cassandra Virginie Canon Europe Ltd European Patent Department 3 The Square Stockley Park Uxbridge, Middlesex UB11 1ET (GB)**

(54) **Radiation imaging apparatus, method of controlling radiation imaging apparatus, and storage medium**

(57) A radiation imaging apparatus (100) comprising: reception means (109) for receiving imaging parameters; and setting means (109) for setting, in accordance with a binning size and frame rate included in the imaging parameters: a combination of a digital binning size and an analog binning size which form the binning size; and/or a non-destructive read-out count within a range in which imaging is configured to be performed at the frame rate.

**F I G. 10**

START

TURN ON POWER SUPPLY ～ S1

ESTABLISH COMMAND COMMUNICATION LINE ～ S2

RECEIVE IMAGING UNIT STATE TRANSITION COMMAND ～ S3

RECEIVE IMAGING MODE SETTING COMMAND ～ S4

SET DIGITAL BINNING/ ANALOG BINNING ～ S5

PERFORM IMAGING OPERATION IN ACCORDANCE WITH IMAGING PULSE INPUT ～ S6

END

EP 2 675 152 A2

## Description

BACKGROUND OF THE INVENTION

Field of the Invention

The present invention relates to a radiation imaging apparatus, a method of controlling the radiation imaging apparatus, and a storage medium.

Description of the Related Art

Recently, in the field of radiation imaging apparatuses, instead of an image intensifier, a large-area flat panel sensor based on a 1x optical system using photoelectric conversion elements has been widely used for the purpose of increasing resolution, decreasing volume, and suppressing image distortion.

Radiation imaging apparatuses using photoelectric conversion elements include amorphous silicon type apparatuses, CCD (charge coupled device) type apparatuses, and CMOS (complementary metal-oxide semiconductor) type apparatuses. Image sensors using amorphous silicon semiconductors on a glass substrate allow easy formation of a large-area imaging apparatus. On the other hand, as compared with a single-crystal silicon semiconductor substrate, amorphous silicon makes it difficult to microfabricate a semiconductor substrate on a glass substrate. As a consequence, for example, the capacitance of each output signal line increases. That is, the semiconductor characteristics become insufficient with respect to operation. Although a CCD-type image sensor is of a completely-depleted type and has high sensitivity, the use of this element for a large-area imaging apparatus will lead to an increase in the number of transfer stages for electric charge transfer, resulting in power consumption as much as 10 times that of a CMOS-type image sensor. That is, this technique is not suitable for a large-area imaging apparatus.

A CMOS-type image sensor is capable of reading out with high sensitivity and at high speed owing to microfabrication as compared with amorphous silicon. In addition, a CMOS-type image sensor is known as being highly advantageous especially when implementing a moving-image-capturing apparatus using a large-area flat panel-type sensor. This is because this element facilitates the implementation of large-area imaging regardless of the number of transfer stages for electric charge transfer and power consumption unlike a CCD-type image sensor.

Japanese Patent Laid-Open No. 2002-344809 discloses a large-area flat panel-type sensor, which implements large-area imaging by using CMOS-type image sensors as photoelectric conversion elements, more specifically by tiling rectangular semiconductor substrates which are rectangular CMOS-type photoelectric conversion elements cut out from a silicon semiconductor wafer.

When performing imaging mode setting operation before imaging operation using this sensor, the control apparatus sets various types of imaging parameters in the radiation imaging apparatus. The imaging parameters include a binning size, gain setting, accumulation time, and frame rate. After the imaging mode is set, the apparatus executes radiation imaging in the set imaging mode in accordance with an imaging pulse input timing.

In the sensor disclosed in Japanese Patent Laid-Open No. 2002-344809, however, random noise is sometime generated in the image captured by radiation imaging depending on set imaging parameters.

SUMMARY OF THE INVENTION

In consideration of the above problem, it is desired to provide a technique of reducing random noise generated in a captured radiation image.

According to one aspect of the present invention, there is provided a radiation imaging apparatus as specified in claim 1.

According to another aspect of the present invention, there is provided a method of controlling a radiation imaging apparatus as specified in claim 7.

Further features of the present invention will be apparent from the following description of exemplary embodiments with reference to the attached drawings.

BRIEF DESCRIPTION OF THE DRAWINGS

Fig. 1 is a circuit diagram showing an example of a pixel circuit two-dimensionally arranged on a rectangular semiconductor substrate;

Fig. 2 is a timing chart showing an example of driving control at the time of moving image capturing in the pixel circuit in Fig. 1;

Fig. 3 is a circuit diagram schematically showing an example of the internal structure of a rectangular semiconductor substrate as a CMOS-type image sensor;

Fig. 4 is a schematic block diagram showing an overall large-area flat panel type radiation imaging system;

Fig. 5 is a timing chart for reading out pixel data from three tiled rectangular semiconductor substrates by using one A/D converter;

Fig. 6 shows a circuit diagram of a pixel addition circuit in the CMOS-type image sensor and a schematic view showing the arrangement of the pixel addition circuit;

Fig. 7 is a view showing setting priorities for the combinations of digital binning sizes and analog binning sizes;

Fig. 8 is a graph showing the relationship between digital binning sizes, analog binning sizes, and reductions in random noise;

Fig. 9 is a view showing maximum frame rates corresponding to the respective parameter settings;

Fig. 10 is a flowchart showing a procedure for processing executed by a radiation imaging apparatus according to the first embodiment;

Fig. 11 is a graph showing how random noise decreases in relation with non-destructive read out averaging counts; and

Fig. 12 is a flowchart showing a procedure for processing executed by a radiation imaging apparatus according to the second embodiment.

DESCRIPTION OF THE EMBODIMENTS

An exemplary embodiment(s) of the present invention will now be described in detail with reference to the drawings. It should be noted that the relative arrangement of the components, the numerical expressions and numerical values set forth in these embodiments do not limit the scope of the present invention.

(First Embodiment)

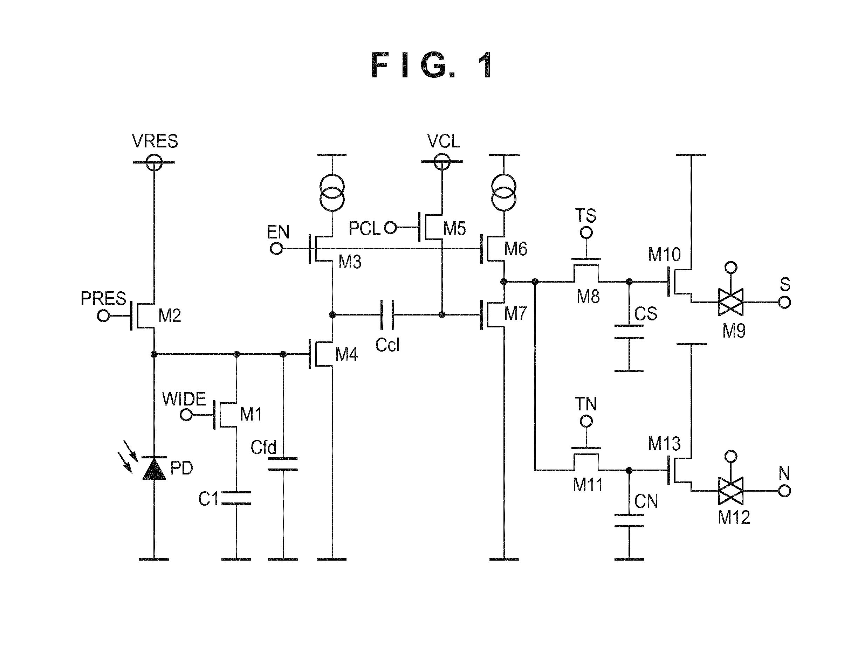

Fig. 1 shows an example of a pixel circuit corresponding to one pixel, which is two-dimensionally arranged on a CMOS-type rectangular semiconductor substrate used for tiling. Referring to Fig. 1, reference symbol PD denotes a photodiode for performing photoelectric conversion; M2, a reset MOS transistor (reset switch) for removing the electric charge accumulated in a floating diffusion (floating diffusion region); Cfd, the capacitance of a floating diffusion (floating diffusion region) which accumulates electric charge; M1, a sensitivity switching MOS transistor (sensitivity switch) for switching between a high dynamic range mode and a high sensitivity mode; and C1, a capacitor for dynamic range enlargement, which can accumulate electric charge when the sensitivity switch M1 is turned on. Turning on the sensitivity switch M1 will substantially increase the capacitance of the floating node portion, and hence can enlarge the dynamic range although the sensitivity decreases. At the time of fluoroscopy which requires high sensitivity, therefore, the sensitivity switch M1 is turned off. At the time of DSA imaging (digital subtraction angiography imaging) or the like which requires a high dynamic range, the sensitivity switch M1 is turned on. Reference symbol M4 denotes an amplifying MOS transistor (pixel amplifier 1) operating as a source-follower; and M3, a selection MOS transistor (selection switch 1) for activating a pixel amplifier 1 M4.

A clamping circuit for removing kTC noise generated by a photoelectric conversion unit is provided on the subsequent stage of the pixel amplifier M4. (k is the Boltzmann constant, T is the temperature and C is the capacitance of the capacitor; the product of these values gives a noise caused by the electrical circuit.) Reference symbol Ccl denotes a clamping capacitor; M5, a clamping MOS transistor (clamping switch); M7, an amplifying MOS transistor (pixel amplifier 2) operating as a source-follower; and M6, a selection MOS transistor (selection switch 2) for activating the pixel amplifier M7.

The subsequent stage of a pixel amplifier 2 M7 is provided with two sample/hold circuits. Reference symbol M8 denotes a sample/hold MOS transistor (sample/hold switch S) which forms a sample/hold circuit for optical signal accumulation; CS, an optical signal hold capacitor; M11, a sample/hold MOS transistor (sample/hold switch N) which forms a noise signal accumulation sample/hold circuit; CN, a noise signal hold capacitor; M10, an optical signal amplifying MOS transistor (pixel amplifier S) which operates as a source-follower; M9, an analog switch (transfer switch S) for outputting the optical signal amplified by a pixel amplifier S M10 to the S signal output line; M13, a noise signal amplifying MOS transistor (pixel amplifier N) which operates as a source-follower; and M12, an analog switch (transfer switch N) for outputting the noise signal amplified by a pixel amplifier N M13 to the N signal output line.

A signal EN is a control signal which is connected to the gates of a selection switch 1 M3 and selection switch 2 M6 to activate the pixel amplifier 1 M4 and the pixel amplifier 2 M7. When the signal EN is set at high level, the pixel amplifier 1 M4 and the pixel amplifier 2 M7 are simultaneously activated. The signal WIDE is connected to the gate of the sensitivity switch M1 to control sensitivity switching. When the signal WIDE is set at low level, the sensitivity switch is turned off to set the high sensitivity mode. A signal PRES is a reset signal for turning on the reset switch M2 to remove the electric charge accumulated in the photodiode PD. A signal PCL is a signal for controlling the clamping switch M5. When the signal PCL is set at high level, the clamping switch M5 is turned on to set the clamping capacitor Ccl at the reference voltage VCL. A signal TS is an optical signal sample/hold control signal. Setting the signal TS at high level to turn on a sample/hold switch S M8 will collectively transfer the optical signal to the capacitor CS via the pixel amplifier 2 M7. Subsequently, setting the signal TS at low level at once for all the pixels to turn off the sample switch S M8 will stop holding optical signal charge in the sample/hold circuit. A signal TN is a noise signal sample/hold control signal. Setting the signal TN at high level to turn on a sample/hold switch N M11 will collectively transfer the noise signal to the capacitor CN via the pixel amplifier 2 M7. Setting the signal TN at low level at once for all the pixels to turn off the sample switch N M11 will stop holding noise signal charge in the sample/hold circuit. After sampling/holding of the capacitors CS and CN, the sample/hold switch S M8 and the sample/hold switch N M11 are turned off to disconnect the capacitors CS and CN from the accumulation circuit on the preceding stage. This makes it possible to non-destructively read out optical signals accumulated until they are sampled/held again.

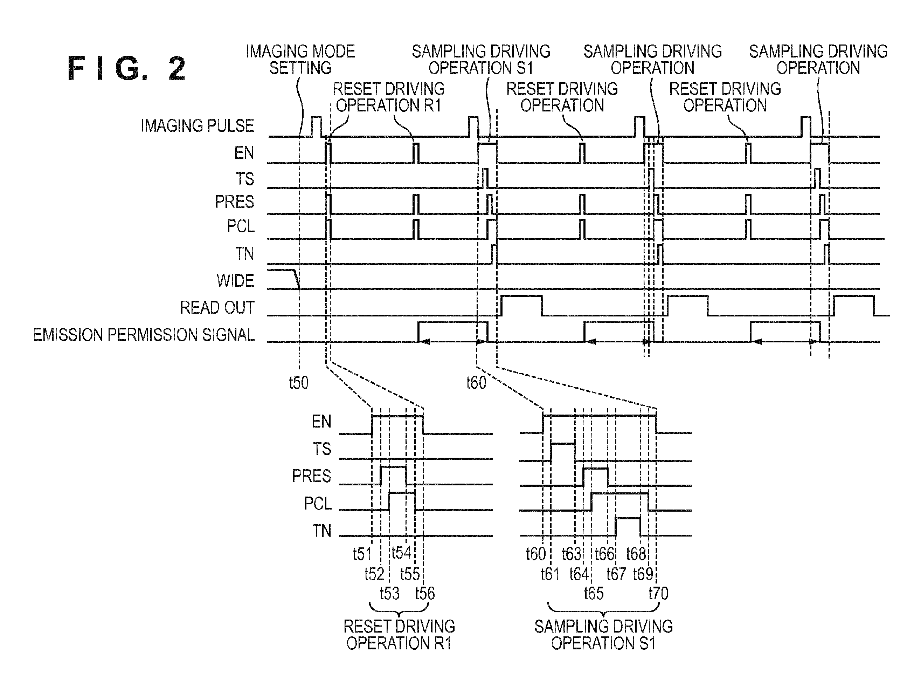

Fig. 2 is a timing chart showing an example of driving control at the time of moving-image capturing in the pixel circuit in Fig. 1. The timings of control signals used until an electric charge is sampled and held in the optical signal hold capacitor CS and in the noise signal hold capacitor CN in a moving-image capturing operation will be described with reference to Fig. 2.

In the timing chart of Fig. 2, when an imaging mode is set at t50 in response to setting WIDE signal at high levels and an imaging pulse is input, the apparatus starts a driving operation for imaging in response to the pulse as a trigger from t51. The apparatus performs reset driving R1 to perform resetting and clamping in the interval from t51 to t56.

First of all, the apparatus sets the signal EN at high level at t51 to activate the pixel amplifier 1 M4 and the pixel amplifier 2 M7. The apparatus then sets a signal PRES at high level to connect the photodiode PD to the reference voltage to perform resetting at t52. Thereafter, at t54, the apparatus sets the signal PRES at low level to finish resetting, and sets a reset voltage on the pixel amplifier 1 M4 side of the clamping capacitor Ccl. At t53, the apparatus sets a signal PCL at high level to turn on the clamping switch M5 to set a reference voltage VCL on the pixel amplifier 2 M7 side of the clamping capacitor Ccl. At t55, the apparatus then turns off the clamping switch M5 and accumulates electric charge corresponding to the voltage difference between the reference voltage VCL and a reset voltage VRES in the clamping capacitor Ccl, thereby finishing clamping. The apparatus sets the signal EN at low level to finish reset driving R1 at t56. The photodiode PD and the photoelectric conversion unit of the floating diffusion capacitor Cfd start accumulation from t56. In the timing chart of Fig. 2, the apparatus controls the accumulation time by performing reset driving as needed.

The tiled CMOS type image sensors are configured to collectively perform accumulation start driving operation of all the pixels of the respective tiled image sensors at the same timing in the same period so as to prevent image misregistration caused by temporal switching offsets between image sensors and scanning lines at the time of moving image capturing. Thereafter, photocharge generated by the photodiode PD is collectively accumulated in the capacitor Cfd.

In reset driving operation from t51 to t56, reset noise (kTC noise) is generated in the photoelectric conversion unit. The apparatus removes this reset noise by setting a reference voltage VCL on the pixel amplifier 2 (M7) side of the clamping capacitor Ccl of the clamping circuit.

Subsequently, when an imaging pulse is input, the apparatus starts sampling driving operation S1 indicated in the interval from t60 to t70 in response to the pulse as a trigger. At t60, the apparatus sets the signal EN at high level to turn on the selection switch 1 M3 and the selection switch 2 M6. This converts the electric charge accumulated in the capacitor Cfd into a voltage and outputs the converted voltage from the pixel amplifier M4, which operates as a source-follower, to the clamping capacitor Ccl. The output from the pixel amplifier 1 M4 includes reset noise. Since the pixel amplifier 2 M7 side is set to the reference voltage VCL at the time of resetting by the clamping circuit, the output is output, as an optical signal from which the reset noise is removed, to the pixel amplifier 2 M7. The apparatus then sets the sample/hold control signal TS at high level to turn on the sample/hold switch S M8 at t61, thereby collectively transferring the optical signal to the optical signal hold capacitor CS via the second pixel amplifier 2 M7. At t63, the apparatus sets the signal TS at low level to turn off the sample/hold switch S M8, thereby sampling and holding photocharge signals in the optical signal hold capacitor CS. At t64, the apparatus sets the reset signal PRES at high level to turn on the reset switch M2 so as to reset the capacitor Cfd to a reset voltage VRES. At t66, the apparatus sets the reset signal PRES at low level to complete resetting. In addition, at t65, the apparatus sets the signal PCL at high level. The apparatus accumulates, in the clamping capacitor Ccl, electric charge corresponding to the voltage difference between the clamping voltage VCL and the reset voltage VRES on which reset noise is superimposed. Thereafter, at time t67, the apparatus sets the signal TN at high level to turn on the sample/hold switch N M11. This transfers the noise signal generated when the reference voltage VCL is set to the noise signal hold capacitor CN. Subsequently, at t68, the apparatus sets the signal TN at low level to turn off the sample/hold switch N M11. This causes the noise signal hold capacitor CN to sample and hold a noise signal. At t70 and t69, the apparatus sets the signal EN and the signal PCL respectively at low levels to finish the sampling driving operation S1. Then, the apparatus sets the signal READ OUT at high levels. Also, an emission is permitted at the time periods when EMISSION PERMISSION SIGNAL is set at high levels. The apparatus collectively performs sampling driving operation for all the pixels. Subsequently, the apparatus repeats the above operation in accordance with imaging pulse input timings.

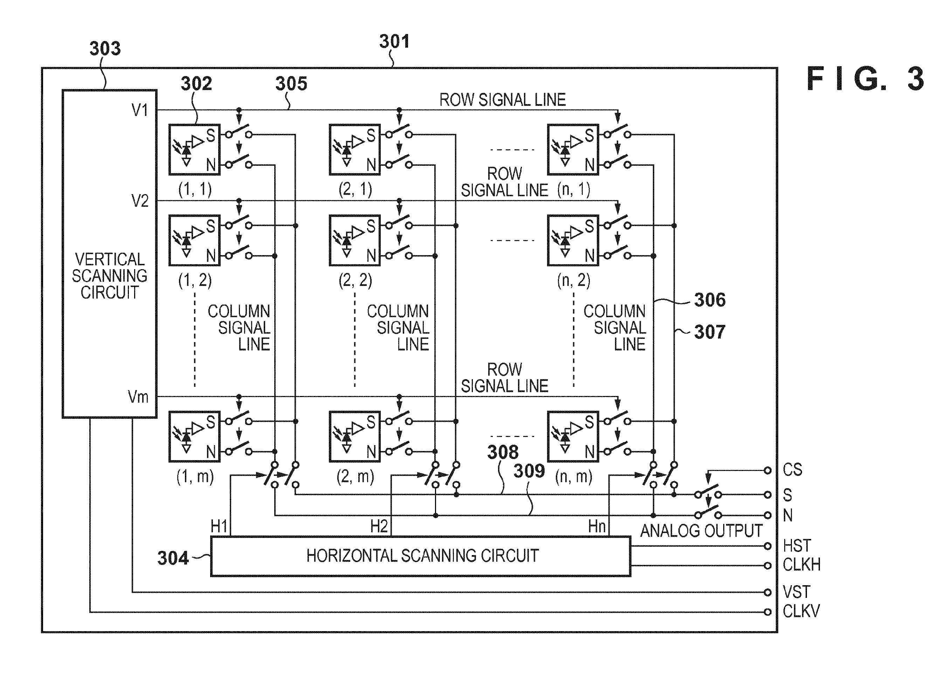

Fig. 3 schematically shows an example of the internal structure of a CMOS rectangular semiconductor substrate. A rectangular semiconductor substrate 301 includes a pixel circuit 302, a vertical scanning circuit 303, a horizontal scanning circuit 304, a row signal line 305, a column signal line 306, a column signal line 307, an analog voltage output line 308, and an analog voltage output line 309. The rectangular semiconductor substrate 301 includes a chip select terminal CS, an optical signal output terminal S, a noise signal output terminal N, a vertical scanning circuit start signal terminal VST, a vertical scanning circuit clock terminal CLKV, a horizontal scanning circuit start signal terminal HST, and a horizontal scanning circuit clock terminal CLKH.

The vertical scanning circuit 303 selects a pixel group in the horizontal direction and sequentially scans the pixel group in the vertical direction as the sub-scanning direction in synchronism with a vertical scanning clock CLKV. The horizontal scanning circuit 304 sequentially selects column signal lines for the pixel group in the main scanning direction, which is selected by the vertical scanning circuit 303, pixel by pixel in synchronism with a horizontal scanning clock CLKH. The pixel circuit 302 having the arrangement shown in Fig. 1 outputs the optical signal voltage signals sampled and held by the column signal lines 306 and 307 from the optical signal output terminal S by enabling the row signal line 305 as an output line of the vertical scanning circuit 303, and outputs a noise voltage signal from the noise signal output terminal N. The horizontal scanning circuit 304 sequentially selects the voltage signals output to the column signal lines 306 and 307 to sequentially output voltage signals originating from the respective pixels to the analog voltage output lines 308 and 309.

As described above, the rectangular semiconductor substrate 301 is configured to perform pixel selection by switching operation based on the X-Y address scheme using the vertical scanning circuit 303 and the horizontal scanning circuit 304 and output the voltage signals of an optical signal S and noise signal N originating from each pixel and amplified by the transistors to the analog output terminal S and the analog output terminal N via the column signal line 306, the column signal line 307, the analog voltage output line 308, and the analog voltage output line 309.

The terminal CS is a chip select signal input terminal. Turning on the terminal CS will output the optical voltage signal S and the noise voltage signal N obtained by the image sensor according to internal scanning from the analog output terminal S and the analog output terminal N. The S signal output switching analog switch (transfer switch S), the N signal output switching analog switch (transfer switch N), the column signal lines 307 and 306 as transmission paths for the optical voltage signal S and the noise voltage signal N, and the switching transistors which switch column signal lines based on outputs from the horizontal scanning circuit 304, which are located on the subsequent stage of the sample/hold circuit, constitute a read out scanning transmission circuit.

The vertical scanning circuit clock terminal CLKV corresponds to a clock for the vertical scanning circuit 303, and the vertical scanning circuit start signal terminal VST is a start signal for the vertical scanning circuit 303. Inputting the vertical scanning clock CLKV after setting the vertical scanning start signal terminal VST at high level will sequentially switch and enable row selection signals in the order of V1, V2,..., Vm. Upon starting vertical scanning, the apparatus sets the vertical scanning start signal VST at low level. The horizontal scanning circuit clock terminal CLKH corresponds to a clock for the horizontal scanning circuit, and the horizontal scanning circuit start signal HST is a start signal for the horizontal scanning circuit. Inputting the horizontal scanning clock CLKH after setting the horizontal scanning start signal HST at high level will sequentially switch and enable column selection signals in the order of H1, H2,..., Hn. Upon starting horizontal scanning, the apparatus sets the horizontal scanning start signal HST at low level.

Enabling the row selection signal V1 output of the vertical scanning circuit 303 will select a pixel group of (1, 1) to (n, 1) on one horizontal row connected to the row selection signal V1 and output the voltage signals N and S from the respective pixels on one horizontal row to the column signal lines 306 and 307. Sequentially switching and enabling column selection signals for the horizontal scanning circuit 304 in the order of H1, H2,..., Hn will output the voltage signals S and N from the pixels on one horizontal row to the analog output terminals S and N via the analog voltage output lines 308 and 309. Performing horizontal scanning up to the row selection signal Vm in the same manner as described above will obtain pixel outputs from all the pixels.

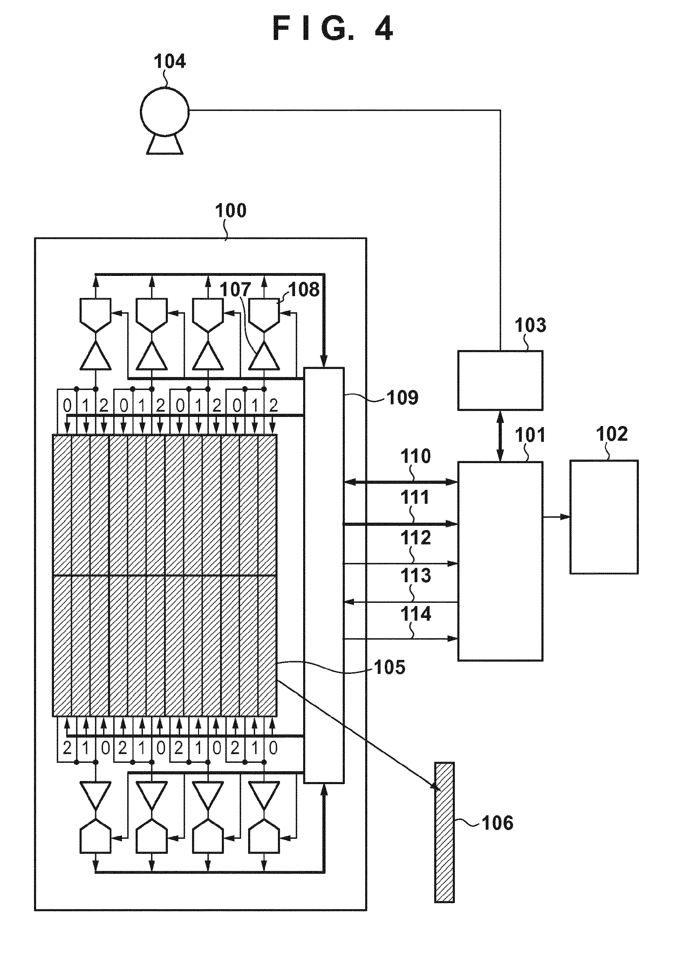

Fig. 4 is a schematic block diagram showing a large-area flat panel-type radiation imaging system. The radiation imaging system includes a radiation imaging apparatus 100, an image processing/system control apparatus 101, an image display apparatus 102, a radiation generation apparatus 103, and a radiation tube 104. At the time of imaging, the image processing/system control apparatus 101 performs synchronization control on the radiation imaging apparatus 100 and the radiation generation apparatus 103. A scintillator (not shown) converts the radiation transmitted through an object into visible light. After photoelectric conversion corresponding to the amount of light, the resultant data is A/D-converted. As a consequent, the radiation imaging apparatus 100 transfers frame image data corresponding to the radiation irradiation to the image processing/system control apparatus 101, which then processes the image data and displays a radiation image on the image display apparatus 102 in real time.

An imaging control unit 109 performs control command communication and synchronization signal communication with the image processing/system control apparatus 101 and transmits image data to the image processing/system control apparatus 101. The imaging control unit 109 also has a function of controlling the flat panel sensor. That is, the imaging control unit 109 performs driving control and imaging mode control on the flat panel sensor, combines digital image data for the respective blocks, which are A/D-converted by a plurality of A/D converters in the radiation imaging apparatus 100, into frame data and transfers it to the image processing/system control apparatus 101.

The image processing/system control apparatus 101 notifies the imaging control unit 109 of imaging mode settings, various parameter settings, imaging start setting, imaging end setting, and the like by using a command control communication line 110. In addition, the imaging control unit 109 notifies the radiation imaging apparatus 100 of the state of the radiation imaging apparatus 100 and the like.

The imaging control unit 109 sends captured image data to the image processing/system control apparatus 101 by using an image data interface 111. The imaging control unit 109 notifies the image processing/system control apparatus 101 that the radiation imaging apparatus 100 is set in an imaging ready state by a signal READY 112. Upon receiving the signal READY 112 from the imaging control unit 109, the image processing/system control apparatus 101 notifies the imaging control unit 109 of the timing of radiation irradiation by using an external synchronization signal 113.

The image processing/system control apparatus 101 transmits an emission permission signal 114 to the radiation generation apparatus 103 while the signal is enabled. The radiation emitted from the radiation tube 104 connected to the radiation generation apparatus 103 is accumulated as effective radiation to form a radiation image.

A flat panel sensor 105 is formed by tiling 12 column x 12 row rectangular semiconductor substrates 106 into a matrix, which are CMOS image sensors obtained by cutting rectangular two-dimensional photoelectric conversion elements from a silicon semiconductor wafer. The following is a case in which 128 pixels and 896 pixels are respectively formed in the horizontal and vertical directions at a pitch of 160 $\mu$m on the cut rectangular semiconductor substrate 106 having a width of about 20 mm and a length of about 140 mm.

The flat panel sensor 105 performs digital conversion of signals from the three tiled rectangular semiconductor substrates by using one A/D converter 108 as a conversion region. Assume that a conversion clock of 20 MHz is used for the A/D converter 108 for rectangular semiconductor substrate read out operation. The A/D converter 108 is connected to an amplifier 107, and performs A/D conversion on one line in the horizontal direction and sequentially and repeatedly performs conversion in the vertical direction from the outside to the central portion on the rectangular semiconductor substrate in one A/D conversion region constituted by three rectangular semiconductor substrates while switching chip select signals.

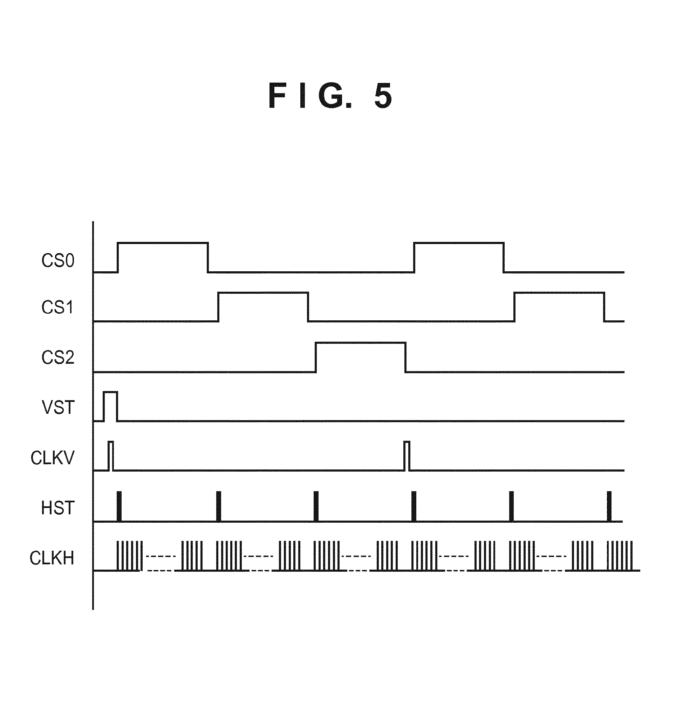

Fig. 5 is a timing chart for reading out pixel data from three tiled rectangular semiconductor substrates by using one A/D converter.

Signals CS0 to CS2 are chip select signals for controlling the output of analog signals from rectangular semiconductor substrates. The numbers assigned to analog output signals from the rectangular semiconductor substrates in Fig. 4 one-to-one correspond to the numbers of the chip select signals CS0, CS1, and CS2 in the timing chart. For example, while the signal CS0 is at high level, an analog output of analog output signal number "0" from the rectangular semiconductor substrate is activated, and is output to the amplifier 107 on the next stage. When the signal CS1 is at high level, an analog output of analog output signal number "1" is activated, and is output to the amplifier 107 on the next stage. When the signal CS2 is at high level, an analog output of analog output signal number "2" is activated, and is output to the amplifier 107 on the next stage. The signal CS0 is connected to the rectangular semiconductor substrate of analog output signal number "0". The signal CS1 is connected to the rectangular semiconductor substrate of analog output signal number "1". The signal CS2 is connected to the rectangular semiconductor substrate of analog output signal number "2".

In an image read-out operation, when one rectangular semiconductor substrate is selected by the chip select signal CS0, and the vertical scanning clock CLKV rises while the vertical scanning start signal VST is at high level, the row signal line V1 of the vertical scanning circuit in Fig. 3 is enabled. This activates an output of the pixel group (1, 1) to (n, 1) selected by the row signal line V1 to output pixel voltage signals from the respective pixels of the pixel group of (1, 1) to (n, 1) to a column signal line.

When the horizontal scanning clock CLKH rises while the horizontal scanning start signal HST is at high level, the column selection row signal H1 of the horizontal scanning circuit 304 is enabled. In synchronism with leading edges of the signal CLKH, the column selection row signal of the horizontal scanning circuit 304 is switched to H2,..., Hn to select pixels from (1, 1) to (n, 1), thereby completing scanning of the pixel group in the horizontal direction on the rectangular semiconductor substrate selected by the chip select operation in the horizontal direction. The apparatus performs A/D conversion in synchronism with the signal CLKH. The apparatus then performs horizontal scanning in the same manner as described above upon performing chip select switching in accordance with the signal CS1, and also performs horizontal scanning in the same manner as described above upon performing chip select switching in accordance with the signal CS2, thereby completing read out of the pixel group arrayed on one horizontal line on the three rectangular semiconductor substrates. Subsequently, the apparatus performs horizontal scanning up to Vm while sequentially switching the row signal lines of the vertical scanning circuit 303 in accordance with the signal CLKV, thereby completing read out of all the pixels on the three rectangular semiconductor substrates.

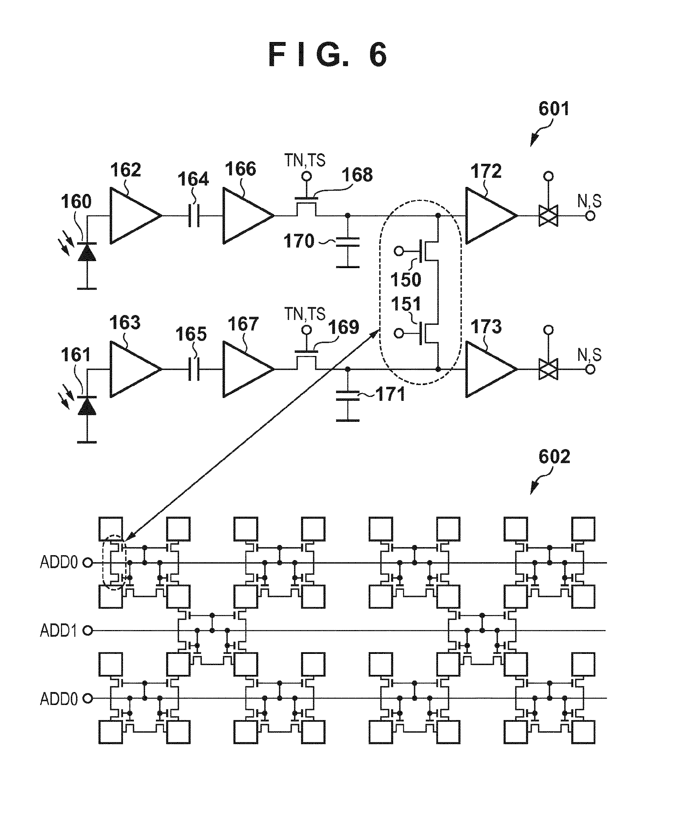

Referring to Fig. 6, reference numerals 601 and 602 respectively denote a circuit diagram of pixel addition circuits in a CMOS type rectangular semiconductor substrate and a schematic view showing the arrangement of the addition circuits. Reference numeral 601 in Fig. 6 denotes an example of a circuit obtained by inserting pixel addition circuits in a simplified circuit of the two pixel circuits in Fig. 1. An actual circuit includes pixel addition circuits respectively provided for the signals S and N. For the sake of simplicity, however, reference numerals 601 and 602 in Fig. 6 each denote only one of sample/hold circuits provided for the signals S and N. The same applies to TN and TS. Photodiodes 160 and 161 are those provided for the respective circuits, and each correspond to the photodiode PD in Fig. 1. Amplifying MOS transistors 162, 163, 166, 167, 172, and 173 are those (pixel amplifiers) operating as the source-followers of the respective circuits. The amplifying MOS transistors 162 and 163 each correspond to the pixel amplifier 1 M4. The amplifying MOS transistors 166 and 167 each correspond to the pixel amplifier 2 M7. The amplifying MOS transistors 172 and 173 each correspond to the pixel amplifier S M10 or the pixel amplifier N M13 in Fig. 1. Clamping capacitors 164 and 165 are those provided for the respective circuits, and each correspond to the clamping capacitor Ccl in Fig. 1. Sample MOS transistors 168 and 169 are those (sample switches) forming sample/hold circuits for optical signal or noise signal accumulation which are provided for the respective circuits. The sample MOS transistors 168 and 169 each correspond to the sample/hold switch S M8 or sample/hold switch N M11 in Fig. 1. Capacitors 170 and 171 are optical signal or noise signal hold capacitors, and each correspond to the optical signal hold capacitor CS or noise signal hold capacitor CN in Fig. 1. Addition MOS transistors 150 and 151 are those (addition switches) forming pixel addition circuits. Reference numeral 602 in Fig. 6 denotes a pixel addition circuit, with the symbol "□" representing a pixel circuit corresponding to one pixel of the rectangular semiconductor substrate. The circuit portion enclosed with the dotted line in the circuit denoted by reference numeral 601 in Fig. 6 is the same as that enclosed with the dotted line in the circuit denoted by reference numeral 602 in Fig. 6. As indicated by "602" in Fig. 6, the optical signal or noise signal hold capacitors of the respective adjacent pixels are connected to each other to perform pixel addition. This makes it possible to decrease the number of pixels to be scanned without discarding pixel information and implement read out (imaging) of signals at a higher frame rate. According to "602" in Fig. 6, setting signals ADD0 and ADD1 at high level and low level, respectively, will perform pixel addition of 2 pixels (vertical) x 2 pixels (horizontal) = 2 x 2. Setting both the signals ADD0 and ADD1 at high level will perform pixel addition of 4 pixels (vertical) x 4 pixels (horizontal) = 4 x 4. This function executes binning in an analog manner, and hence is called an analog binning function. Note that using the analog binning function will reduce random noise as compared with before binning.

An FPGA (Field-Programmable Gate Array) in the radiation imaging apparatus 100 includes a function of digitally averaging read out images. The apparatus averages, for example, 2 x 2 pixels or 4 x 4 pixels in an averaging region. This function is called a digital binning function. It is known that the digital binning function reduces the amount of random noise to 1/n by averaging n x n pixels.

It is also possible to execute analog binning and digital binning in combination. For example, executing digital 2 x 2 binning processing of the image read out by analog 2 x 2 binning processing can obtain an image with a 4 x 4 binning size.

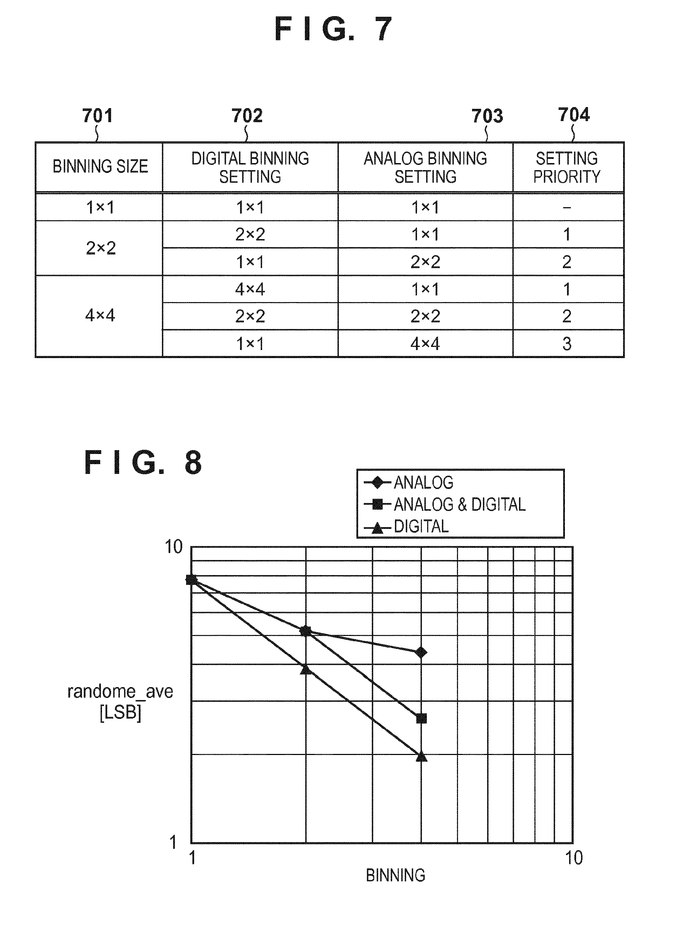

Fig. 7 shows an example of combinations of analog binning settings 702 and digital binning settings 703 for binning sizes 701. For a binning size (1 x 1), a digital binning size (1 x 1) and an analog binning size (1 x 1) are set. For a binning size (2 x 2), a digital binning size (2 x 2) and an analog binning size (1 x 1) or a digital binning size (1 x 1) and an analog binning size (2 x 2) are set. For a binning size (4 x 4), a digital binning size (4 x 4) and an analog binning size (1 x 1), a digital binning size (2 x 2) and an analog binning size (2 x 2), or a digital binning size (1 x 1) and an analog binning size (4 x 4) are set. Note that setting priorities 704 indicate the setting priorities of the combinations of digital binning sizes and analog binning sizes described above, which constitute the respective binning sizes 701. In this example, when a plurality of combinations exist, higher priorities are set for larger digital binning sizes.

Fig. 8 shows how digital binning and analog binning reduce random noise. Referring to Fig. 8, the abscissa represents binning size, and the ordinate represents random noise value. As shown in Fig. 8, with the same binning size, digital binning alone is higher in random noise reducing effect than analog binning alone. Combinations of digital binning and analog binning take intermediate values between those obtained by the above two cases. Digital binning is, however, performed by averaging processing while temporarily storing image data of a target area in a buffer memory, and hence requires more time than analog binning processing with the same size.

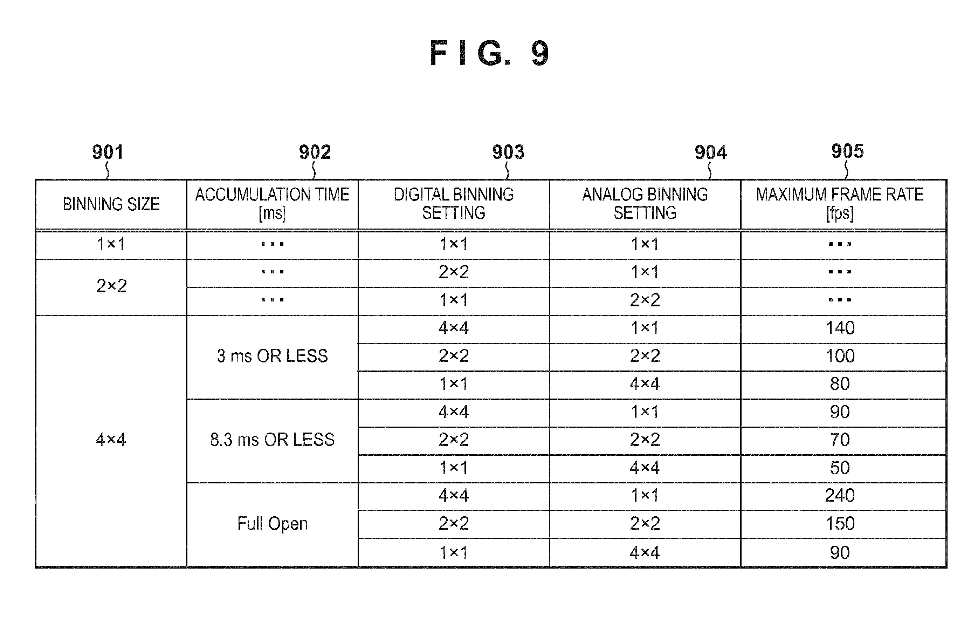

This embodiment, therefore, automatically sets larger digital binning sizes in combinations of digital binning sizes and analog binning sizes within a range in which it is possible to implement read out (imaging) at the frame rate set by the image processing/system control apparatus 101, in order to reduce random noise. That is, a binning size is set in accordance with the setting priorities 704 shown in Fig. 7. Note that whether it is possible to implement read-out (imaging) at a set frame rate is determined from a combination of a binning size and a (maximum) frame rate. For example, a table for determination like that shown in Fig. 7 or 9 is prepared in firmware in the radiation imaging apparatus 100, and a binning combination is decided in accordance with priorities within an operable range.

Assume that a binning size 901 is 4 x 4, the frame rate is 80 fps, and there is no information about an accumulation time 902. In this case, it is possible to select either of the three combinations of digital binning sizes 903 and analog binning sizes 904 corresponding to an accumulation time "Full Open" from the correspondence table in Fig. 9. This is because maximum frame rates 905 are 240 fps, 150 fps, and 90 fps and each are higher than 80 fps. Furthermore, of these three types of combinations, the combination of a digital binning size of 4 x 4 and an analog binning size of 1 x 1 is decided in accordance with the setting priorities in Fig. 7.

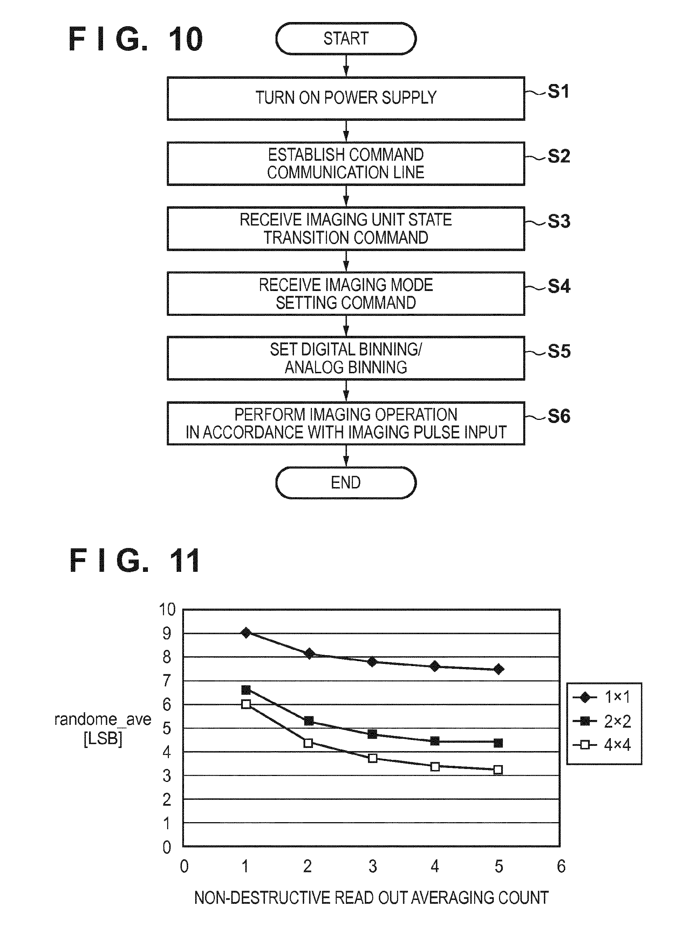

A procedure for processing executed by the radiation imaging apparatus 100 according to this embodiment will be described with reference to the flowchart of Fig. 10.

When the operator turns on the power supply to start the radiation imaging apparatus 100 (step S1), the radiation imaging apparatus 100 establishes a command communication line between itself and the image processing/system control apparatus 101 (step S2). The apparatus establishes a communication line in accordance with communication specifications. For example, the apparatus establishes a port link by designating an IP address when, for example, performing link establishment operation or Ethernet® communication.

Upon establishing a command communication line, the radiation imaging apparatus 100 receives a state transition command from the image processing/system control apparatus 101 for preparation for imaging (step S3). The radiation imaging apparatus 100 can take several states including a sleep state in which the analog system power supply is off for the purpose of power saving, a ready state in which the analog system power supply is on, and an exposure ready state in which imaging operation is ready for execution after repetition of sensor reset driving. The radiation imaging apparatus 100 sequentially makes transition among these states in accordance with state transition commands received from the image processing/system control apparatus 101.

Subsequently, the radiation imaging apparatus 100 receives an imaging mode setting command from the image processing/system control apparatus 101 (step S4). The imaging parameters included in the imaging mode setting command include information such as a binning size and a frame rate. Note that the timing at which the image processing/system control apparatus 101 transmits an imaging mode setting command to the radiation imaging apparatus 100 is an arbitrary timing in the process of making transition among the states of the radiation imaging apparatus 100 or a predetermined timing.

Upon receiving an imaging mode setting command, the radiation imaging apparatus 100 decides a combination of a digital binning size and an analog binning size, within a range in which it is possible to perform imaging at the frame rate included in the imaging parameters, based on the binning size and frame rate included in the imaging parameters and the correspondence table in Fig. 9 (step S5). For example, the radiation imaging apparatus 100 may set a combination of the combinations of digital binning sizes and analog binning sizes forming binning sizes, which includes the maximum digital binning size within a range in which it is possible to perform imaging at the frame rate included in imaging parameters. This corresponds to the example of setting priorities in Fig. 7.

Note that if imaging parameters also include accumulation time information, the apparatus decides a combination of a digital binning size and an analog binning size in consideration of the accumulation time. If the imaging parameters include no accumulation time information, a correspondence table excluding accumulation times is prepared, and the apparatus decides a combination by using the correspondence table. Thereafter, the radiation imaging apparatus 100 makes transition to imaging operation in accordance with the reception of an imaging pulse input (step S6).

According to the above description, the radiation imaging apparatus 100 may notify the image processing/system control apparatus 101 of digital and analog binning settings set inside the radiation imaging apparatus. In addition, the parameters described in this embodiment are an example. If there is another parameter which influences the frame rate, the apparatus takes this parameter into consideration. The embodiment uses the correspondence table when performing decision. However, the apparatus may use a determination expression of the same type.

In addition, the radiation imaging apparatus 100 may internally generate an imaging pulse signal for imaging operation instead of receiving it from the image processing/system control apparatus 101. In this case, upon receiving an imaging start command, the apparatus executes imaging operation at the set frame rate.

As described above, according to this embodiment, setting parameters such as a binning size, accumulation time, and frame rate will optimize a combination of an analog binning and a digital binning in accordance with the parameters based on table information. This makes it possible to reduce random noise generated in a captured radiation image.

(Second Embodiment)

The CMOS type sensor of a radiation imaging apparatus 100 according to this embodiment is configured to be capable of non-destructively reading out the electric charge accumulated in a capacitor or the like while substantially saving the amount of electric charge accumulated in the capacitor (that is, without substantially discharging accumulated electric charge). In a CMOS type sensor capable of non-destructive read out, even if accumulated electric charge is read as an electrical signal, the accumulated electric charge is not read out. It is therefore possible to obtain an output proportional to the amount of electric charge in each pixel in the process of being accumulated while continuing electric charge accumulating operation. For the purpose of reducing random noise, non-destructive read-out count is set in accordance with an in instruction from the image processing/system control apparatus 101.

The FPGA in the radiation imaging apparatus 100 executes averaging processing for the read out pixel values. Letting PX1 be the pixel value obtained by the first non-destructive read out operation, and PXn be the pixel value obtained by the nth non-destructive read out operation, a pixel value PX obtained by n non-destructive read out operations is represented by

$$PX = \frac{\sum_{m=1}^{n} PXm}{n} \cdots (1)$$

It is generally known that n non-destructive read-out operations reduce the random noise amount concerning the analog system circuit for pixel value read out operation to $1/\sqrt{n}$.

Fig. 11 is a graph showing an example of the correlation between non-destructive read-out averaging counts and random noise-reducing effects for each binning size. Referring to Fig. 11, the abscissa represents non-destructive read-out averaging count; and the ordinate represents random noise value. As the non-destructive read out averaging count increases, random noise decreases. However, the reducing effect gradually decreases. For this reason, the upper limit value of the maximum non-destructive read out count is set in advance to, for example, four for each binning size in consideration of the degree of effect. The radiation imaging apparatus 100 automatically sets a maximum non-destructive read-out count within a range in which it is possible to implement read out (imaging) at a received frame rate. Note that the apparatus may set a maximum non-destructive read out count without setting any upper limit value. Whether it is possible to implement read out at a given frame rate may be determined from a prepared correspondence table corresponding to combinations of binning sizes, accumulation times, and frame rates as in the first embodiment.

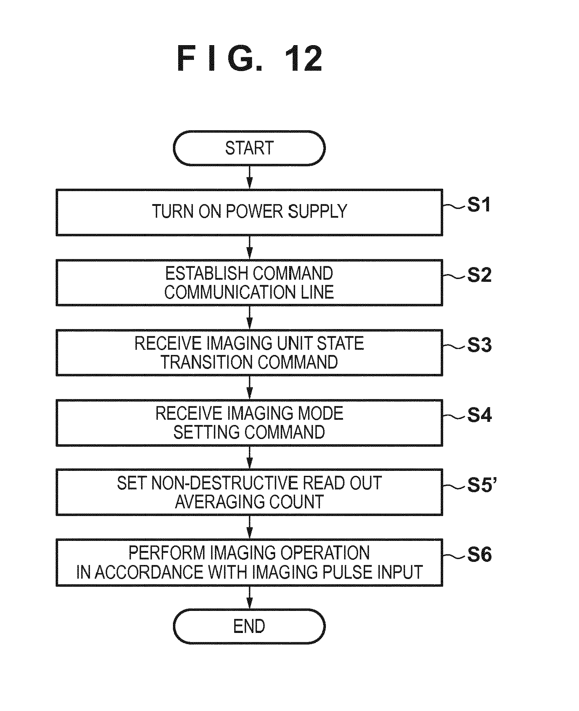

A procedure for processing executed by the radiation imaging apparatus 100 according to this embodiment will be described with reference to the flowchart of Fig. 12. This procedure differs from that shown by the flowchart of Fig. 10 in that the processing in step S5 is replaced by the processing in step S5' in Fig. 12. Other processes are the same as those in Fig. 10, and hence a description of them will be omitted. Upon receiving an imaging mode setting command (step S4), the radiation imaging apparatus 100 sets a non-destructive read out averaging count based on imaging parameters included in the command (step S5'). The apparatus then shifts to imaging operation in accordance with an imaging pulse input (step S6).

Note that the apparatus may notify an image processing/system control apparatus 101 of a set non-destructive read out averaging count as in the case of notifying the image processing/system control apparatus 101 of a combination of an analog binning size and a digital binning size.

Note that if there are differences in random noise reducing effect between non-destructive read out averaging counts in accordance with binning settings and gain settings, the upper limit values of non-destructive read out averaging counts may be set in accordance with respective settings. In addition, the apparatus may concurrently or consecutively execute the processing in step S5 in Fig. 10 and the processing in step S5' in Fig. 12.

Note that the combinations of the digital binning sizes and the analog binning sizes described in the first embodiment and the non-destructive read out counts described in the second embodiment are independent parameters. In actual operation, therefore, the image processing/system control apparatus 101 may set one group of parameters, while the radiation imaging apparatus 100 may set the other group of parameters. Alternatively, the radiation imaging apparatus may automatically set both the groups of parameters.

According to the present invention, it is possible to reduce random noise generated in a captured radiation image.

(Other Embodiments)

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable storage medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A radiation imaging apparatus (100) comprising:

    reception means (109) for receiving imaging parameters; and
    setting means (109) for setting, in accordance with a binning size and frame rate included in the imaging parameters:

        a combination of a digital binning size and an analog binning size which form the binning size; and/or
        a non-destructive read-out count within a range in which imaging is configured to be performed at the frame rate.

**2.** The apparatus (100) according to claim 1, wherein said setting means (109) is configured to set the combination, of the combinations of the digital binning sizes and the analog binning sizes which form the binning sizes, in which the digital binning size is maximized, within a range in which imaging is configured to be performed at the frame rate.

**3.** The apparatus (100) according to claim 1, wherein said setting means (109) is configured to set the non-destructive read out count to a maximum value within a range in which imaging is configured to be performed at the frame rate.

**4.** The apparatus according to claim 3, wherein said setting means (109) is configured to set the non-destructive read-out count to a maximum value within a range in which the count does not exceed the upper limit value.

**5.** The apparatus (100) according to claim 4, wherein the upper limit value is set in advance for said each binning size in accordance with a correlation between the non-destructive read out count and a random noise reducing effect for each binning size.

**6.** The apparatus (100) according to any preceding claim, further comprising a notification means (109) for notifying a control apparatus (101) connected to the radiation imaging apparatus (100) of the combination of the digital binning size and the analog binning size or the non-destructive read out count set by said setting means (109).

**7.** A method of controlling a radiation imaging apparatus, the method comprising:

receiving (S4) imaging parameters; and
setting, in accordance with a binning size and frame rate included in the imaging parameters, at least one of a combination of a digital binning size and an analog binning size which form the binning size (S5); or a non-destructive read out count within a range in which imaging is configured to be performed at the frame rate (S5').

**8.** A non-transitory computer-readable storage medium storing a computer program for causing a computer to execute each step in a method of controlling a radiation imaging apparatus as defined in claim 7.

# FIG. 1

EP 2 675 152 A2

FIG. 2

IMAGING MODE SETTING

RESET DRIVING OPERATION R1

SAMPLING DRIVING OPERATION S1

RESET DRIVING OPERATION

SAMPLING DRIVING OPERATION

RESET DRIVING OPERATION

SAMPLING DRIVING OPERATION

IMAGING PULSE
EN
TS
PRES
PCL
TN
WIDE
READ OUT
EMISSION PERMISSION SIGNAL

t50

t60

EN
TS
PRES
PCL
TN

t51  t54
t52  t55
t53  t56

RESET DRIVING OPERATION R1

t60  t63  t66  t68
t61  t64  t67  t69
t65  t70

SAMPLING DRIVING OPERATION S1

EP 2 675 152 A2

F I G. 3

EP 2 675 152 A2

# F I G. 4

# F I G. 5

# F I G. 6

# F I G. 7

| 701 | 702 | 703 | 704 |
| --- | --- | --- | --- |
| BINNING SIZE | DIGITAL BINNING SETTING | ANALOG BINNING SETTING | SETTING PRIORITY |
| 1×1 | 1×1 | 1×1 | – |
| 2×2 | 2×2 | 1×1 | 1 |
| | 1×1 | 2×2 | 2 |
| 4×4 | 4×4 | 1×1 | 1 |
| | 2×2 | 2×2 | 2 |
| | 1×1 | 4×4 | 3 |

# F I G. 8

randome_ave [LSB]

BINNING

Legend: ANALOG; ANALOG & DIGITAL; DIGITAL

# F I G. 9

EP 2 675 152 A2

| BINNING SIZE | ACCUMULATION TIME [ms] | DIGITAL BINNING SETTING | ANALOG BINNING SETTING | MAXIMUM FRAME RATE [fps] |
|---|---|---|---|---|
| 901 | 902 | 903 | 904 | 905 |
| 1×1 | ・・・ | 1×1 | 1×1 | ・・・ |
| 2×2 | ・・・ | 2×2 | 1×1 | ・・・ |
|  | ・・・ | 1×1 | 2×2 | ・・・ |
| 4×4 | 3 ms OR LESS | 4×4 | 1×1 | 140 |
|  |  | 2×2 | 2×2 | 100 |
|  |  | 1×1 | 4×4 | 80 |
|  | 8.3 ms OR LESS | 4×4 | 1×1 | 90 |
|  |  | 2×2 | 2×2 | 70 |
|  |  | 1×1 | 4×4 | 50 |
|  | Full Open | 4×4 | 1×1 | 240 |
|  |  | 2×2 | 2×2 | 150 |
|  |  | 1×1 | 4×4 | 90 |

# F I G. 10

```
           ( START )
               │
               ▼
┌─────────────────────────────┐
│    TURN ON POWER SUPPLY      │─── S1
└─────────────────────────────┘
               │
               ▼
┌─────────────────────────────┐
│     ESTABLISH COMMAND        │─── S2
│     COMMUNICATION LINE       │
└─────────────────────────────┘
               │
               ▼
┌─────────────────────────────┐
│   RECEIVE IMAGING UNIT STATE │─── S3
│     TRANSITION COMMAND       │
└─────────────────────────────┘
               │
               ▼
┌─────────────────────────────┐
│     RECEIVE IMAGING MODE     │─── S4
│       SETTING COMMAND        │
└─────────────────────────────┘
               │
               ▼
┌─────────────────────────────┐
│     SET DIGITAL BINNING/     │─── S5
│       ANALOG BINNING         │
└─────────────────────────────┘
               │
               ▼
┌──────────────────────────────────────┐
│     PERFORM IMAGING OPERATION         │─── S6
│  IN ACCORDANCE WITH IMAGING PULSE INPUT│
└──────────────────────────────────────┘
               │
               ▼
           (  END  )
```

# F I G. 11

randome_ave
[LSB]

NON-DESTRUCTIVE READ OUT AVERAGING COUNT

◆ 1×1
■ 2×2
□ 4×4

# F I G. 12

```
                    ┌─────────────┐
                    │    START    │
                    └──────┬──────┘
                           ↓
        ┌──────────────────────────────────┐
        │       TURN ON POWER SUPPLY        │─── S1
        └──────────────────┬───────────────┘
                           ↓
        ┌──────────────────────────────────┐
        │       ESTABLISH COMMAND          │─── S2
        │      COMMUNICATION LINE          │
        └──────────────────┬───────────────┘
                           ↓
        ┌──────────────────────────────────┐
        │    RECEIVE IMAGING UNIT STATE    │─── S3
        │       TRANSITION COMMAND         │
        └──────────────────┬───────────────┘
                           ↓
        ┌──────────────────────────────────┐
        │       RECEIVE IMAGING MODE       │─── S4
        │        SETTING COMMAND           │
        └──────────────────┬───────────────┘
                           ↓
        ┌──────────────────────────────────┐
        │   SET NON-DESTRUCTIVE READ OUT   │─── S5'
        │        AVERAGING COUNT           │
        └──────────────────┬───────────────┘
                           ↓
        ┌──────────────────────────────────┐
        │     PERFORM IMAGING OPERATION    │─── S6
        │ IN ACCORDANCE WITH IMAGING PULSE INPUT │
        └──────────────────┬───────────────┘
                           ↓
                    ┌─────────────┐
                    │     END     │
                    └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002344809 A